# EUROPEAN PATENT APPLICATION

(11) **EP 1 555 734 A1**
(43) Date of publication of application: **20.07.2005**
(21) Application number: 04258077.9
(22) Date of filing: 23.12.2004
(51) Int. Cl.: H02K 1/16

(54) **Stator comprising alternating main and auxlilary teeth whereby each main tooth is surrounded by a coil**

(30) Priority: 14.01.2004 GB 0400737
(71) Applicant: ROLLS-ROYCE plc, London, SW1E 6AT (GB)
(72) Inventor: Mitcham, Alan, Ponteland Newcastle upon Tyne NE20 9LJ (GB)
(74) Representative: Gunn, Michael Alan

(57) **Abstract**

A permanent magnet electrical machine (10) has a rotor (12) with permanent magnets (20) and an armature (18). An armature coil (34) is received in a pair of slots and around a locator tooth (32). The walls of a slot (30) are parallel to themselves and to the walls of the other slot (30) of the same slot pair. Thus, parallel sided locator teeth (32) exist between the slots (30) of a slot pair, and tapering spacer teeth (44) exist between two adjacent slot pairs. The spacer teeth (44) are narrower than the locator teeth (32) to provide a greater magnetic flux linkage with the locator teeth (32), and thus increasing the emf within the corresponding coil (34).

## Description

The present invention relates to electrical machines and in particular, to permanent magnet electrical machines.

A conventional design of permanent magnet electrical machine incorporates a fixed armature of coils around a permanent magnet rotor. In an alternative, a linear machine has the armature coils arranged in a line to interact with a permanent magnet traveller. In either case, armature coils are received in slots provided in the armature body. In one winding arrangement, sometimes known as "modular windings", each armature coil is received in a respective pair of armature slots, with adjacent armature coils being received in an adjacent slot pair, so that the coils are physically, electrically and electromagnetically isolated from one another, improving the fault tolerance of the machine.

Whilst modular windings reduce the magnetic coupling between phases, they do not necessarily minimise the coupling to the extent required for fault-tolerant operation. Minimisation of the inter-phase coupling is essential for large fault tolerant permanent magnet machines, motors or generators, used in aircraft or transport systems. Large permanent magnet machines with ratings of typically 100 KW or more are usually constructed with parallel-sided open slots and with bar wound armature coils.

The present invention seeks to provide a large permanent magnet machine that is easier to manufacture has improved specific output, reduced saturation in the teeth and improved magnetic decoupling between phases.

According to the present invention a permanent magnet electrical machine includes an armature comprising a magnetic core, coil slots in the core and coils received in the coil slots;
and a permanent magnet member, which moves relative to the armature;
wherein the coil slots are arranged in the armature in pairs, the slots of each pair being separated by a locator tooth;
each coil is received in the slots of a slot pair and located around the corresponding locator tooth;
and each slot pair is separated from adjacent slot pairs by a spacer tooth, the tips of the locator teeth being wider than the tips of the spacer teeth, when viewed perpendicular to the direction of movement, in use, of the movable member relative to the armature, the wider locator teeth acting to increase the flux linkage with the stator coils.

An increase in the width of the locator teeth is advantageous for all modular wound machines as it increases the flux linkage with the stator coils and the coil emf.

Preferably each of the locator teeth has sides that are substantially parallel to one another. The spacer teeth may have sides that are angled so that the spacer tooth tapers radially inwards towards the tip.

As well as ensuring the decoupling of the phases the spacer teeth also provide a route for heat removal and provide an anchor for slot wedges which are used to retain the coils within the open stator slots.

In the preferred embodiments of the present invention the slots in each pair are arranged substantially parallel to one another. The walls of the slot are substantially parallel with each other and with the walls of the other slot in the same slot pair. This allows for easy insertion and removal of the coils.

The tips of the locator teeth may be closer to the moveable permanent magnet member than the tips of the spacer teeth. The locator teeth carry the useful flux, which thereby induce emf in their respective armature coils, whereas the spacer teeth simply provide a possible return path for that flux. Other return paths exist via the locator teeth of adjacent phases and therefore reducing the spacer tooth width or increasing the spacer tooth air gap effectively reduces the magnetic flux in the spacer teeth without affecting the overall performance of the machine. The increased radial gap reduces magnetic saturation in the spacer teeth and maintains a low reluctance path for armature leakage flux and hence maintains the magnetic decoupling between phases. By increasing the radial gap between the spacer teeth and the permanent magnet member the unwanted magnet induced flux entering the spacer teeth is reduced. The increased radial gap thus minimises magnetic saturation in the spacer teeth.

In the embodiments of the present invention that have been described the moveable permanent magnet member is a rotor. The rotor preferably provides magnetic poles facing the teeth, the magnetic poles being wider than the locator teeth, when viewed parallel to the rotation axis.

The width of the locator teeth may be increased and the width of the spacer teeth reduced up to a point at which the spacer teeth just start to become saturated (accounting for both the armature leakage flux and the limited magnet flux). The magnet poles are ideally wider than the locator teeth to maximise useful armature coil flux linkage.

The increased locator tooth width allows the magnet pole width to be suitably increased and thus the number of poles to be reduced. For most modular permanent magnet machines, the number of poles is typically P=S±n, where n is an even number and n≤S/4. With the increased width of locator teeth, the pole number can now be reduced without loss of performance, so that the number of poles is now given by P=S/2±n. The increased flux linkage by having wider teeth and poles offsets the reduction in frequency due to lower pole number.

Increasing the width of the locator teeth allows the number of magnetic poles on the rotor to be reduced. A smaller number of magnetic poles on the rotor reduces the frequency of operation of the machine, reduces losses and simplifies the converter design.

In a second embodiment of the present invention the machine has 24 coil slots and 14 magnetic poles on the rotor.

In a third embodiment of the present invention the machine has 24 coil slots and 10 magnetic poles on the rotor.

The present invention will now be described in more detail, by way of example only, and with reference to the accompanying drawings, in which:-
Fig. 1 is a highly schematic diagram of a rotary permanent magnet electrical machine, viewed transverse to the rotation axis; and
Fig. 2 is a partial view, at the line 2-2 of Fig. 1, illustrating the manner in which the present invention is implemented in the machine.

Figure 3 is an end view of a permanent magnet machine with the coils removed in accordance with a second embodiment of the present invention.

Figure 4 is an end view of a permanent magnet machine with the coils removed in accordance with a third embodiment of the present invention.

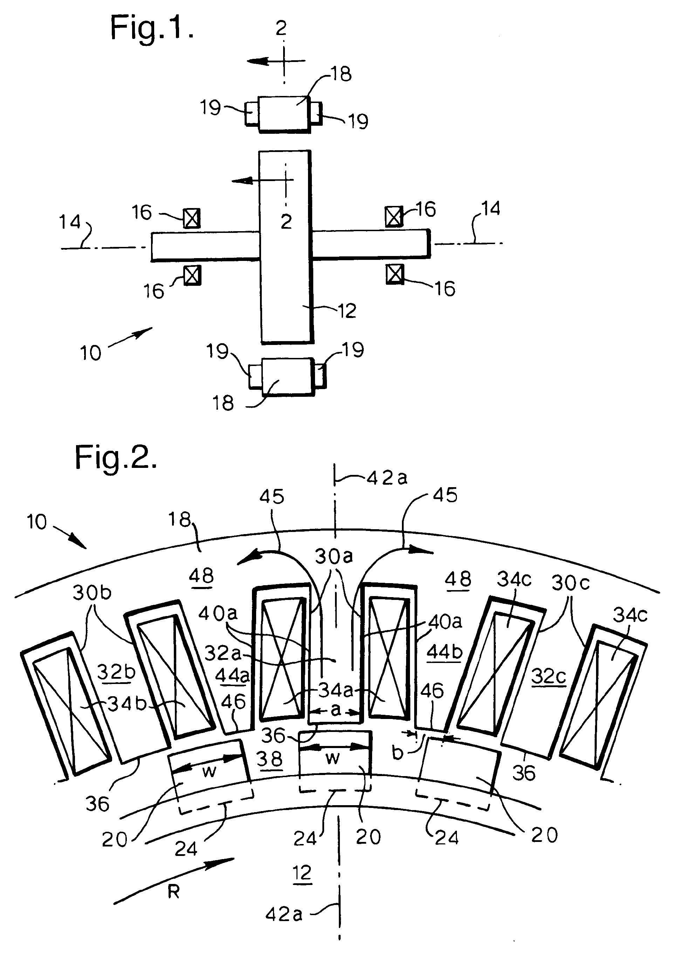

Fig. 1 is a highly schematic diagram illustrating the relative positions of principal components of a permanent magnet electrical machine 10, which may be a generator or motor. The machine 10 is a rotary machine, but the invention may be implemented in a linear machine. The machine has a rotor 12 which is rotatable, in use, about a rotation axis 14, being supported by appropriate bearings 16. The rotor 12 is surrounded by an annular armature 18.

The rotor 12 provides a permanent magnetic field as it rotates. The rotor 12 may carry permanent magnets 20 at its surface, or there may be pole pieces at the rotor surface, with permanent magnets embedded within the rotor 12.

The armature 18 includes a slotted magnetic core, and incorporates armature coils 19 housed within the core slots and arranged around the rotor 12. The coils therefore interact with the permanent magnetic field provided by the rotor 12. The magnetic field turns as the rotor 12 turns, sweeping the armature coils as it does so. It is this interaction which forms the basis of operation of the machine.

This can be understood in more detail by reference to Fig. 2, which shows a short sector of the armature 18, and a corresponding part of the outer surface of the rotor 12.

In this example, the rotor 12 carries permanent magnets 20, evenly spaced around the circumference of the rotor. Each magnet has a width w when viewed parallel to the rotation axis of the rotor 12 i.e. as shown in Fig. 2. The width w is measured at the radially outmost face of the magnet 20.

In an alternative, the magnets 20 carried on the outer face of the rotor 12 may be replaced by pole pieces (indicated at 24) and magnetically connected with one or more permanent magnets located within the body of the rotor 12. In this arrangement, the pole pieces 24 will also have a width w corresponding to those described above.

The armature 18 is a body of iron or other high permeability material, in which slots 30 are formed. The slots 30 are formed in pairs 30a, 30b, 30c. The two slots of each pair are separated by a locator tooth 32a, 32b, 32c. A coil 34a, 34b, 34c is received in the slots 30a, 30b, 30c of each pair, being located around the locator tooth. Thus, the coil 34a is located around the locator tooth 32a of the slots 30a. Although termed a "locator tooth" by reference to the geometry being described, it will be apparent to the skilled reader that the primary purpose of the teeth is to carry magnetic flux.

The locator teeth 32 have tips 36 which face the rotor 12 and past which the magnets 20 pass as the rotor 12 rotates relative to the armature 18. The tips 36 have a width a, when viewed parallel to the rotation axis 14. A narrow gap 38, usually an air gap, exists between the tips 36 and the magnets 20 as they pass one another.

It can be seen from Fig. 2 that the slots 30 of each slot pair are substantially parallel-sided. That is, when viewed parallel to the rotation axis, as in Fig. 2, each slot 30 has walls which are substantially parallel with each other and with the walls of the other slot of the same slot pair. Thus, each slot 30a has two walls 40a which are substantially parallel as seen in Fig. 2. In addition, they are substantially parallel with the walls 40a of the other slot 30a. Consequently, the locator tooth 32a is substantially parallel sided, as seen in Fig. 2. It will therefore readily be understood that the walls 40a are not all radial relative to the rotation axis 14. Indeed, as shown in Fig. 2, none of the walls 40a is strictly radial (i.e. a continuation of the line of any of the walls 40 would not intersect the rotation axis 14). However, all four walls 40a are substantially parallel to a radius 42a which extends from the rotation axis 14 and up the centre of the locator tooth 32a. The geometry of the slots 30b and of the slots 30c is the same as has just been described in relation to the slots 30a, but the walls of the slots 30a are not parallel to the walls of the slots 30b or 30c, which in turn are not parallel to each other.

Providing all four slot walls in each pair to be substantially parallel allows the coils 34 to be designed and built in a simple manner and to be readily introduced into the slots 30 during manufacture, or removed and replaced when faulty. A simple parallel-sided coil can be readily fitted in this manner whilst achieving a high percentage slot fill, which is important in ensuring operating efficiency of the machine 10. The coils 34 of adjacent slot pairs are connected to different phases of the machine 10.

The walls 40 of each slot pair are non-parallel relative to the slot walls of the adjacent slot pair 30. In consequence, each slot 30 is separated from the nearest slot 30 of the adjacent slot pair by a tapered armature portion 44. Thus, the tips 46 of the tapered armature portions 44 are narrower (as viewed in Fig. 2) than the root 48 of the portions 44. The tapered portions 44 are here termed "spacer teeth". The spacer teeth 44 provide a return path for the magnetic flux that passes through the locator teeth 32. They also provide a leakage path for magnetic flux from the adjacent coils. The presence of the spacer teeth 44 ensures magnetic decoupling of the phases, with each coil having its own flux leakage path not linked to that of the adjacent phases. The spacer teeth 44 also enhance the thermal performance of the machine by providing a route to remove heat outwards.

Additionally the spacer teeth 44 may be cut back to increase the radial gap between the magnets 20 and the tips 46. Increasing the gap between the tips 46 and the magnets 20 reduces the non-useful magnet-induced flux entering the separator teeth 44 and therefore reduces magnetic saturation in these teeth.

It will be appreciated that whilst some magnetic saturation within the spacer teeth 44 is acceptable the amount of saturation should be reduced as far as possible to maintain magnetic decoupling between the phases.

The tips 46 of the spacer teeth 44 have a width b when viewed parallel to the rotation axis, as in Fig. 2.

At the instant illustrated in Fig. 2, with the rotor 12 rotating in the direction of the arrow R, a magnet 20 is aligned with the tip 36 of the locator tooth 32a, giving rise to flux 45 which links through the locator tooth 32, splits in the armature body 18 and returns through both adjacent spacer teeth 44.

The width b of the spacer teeth 44 is less than the width a of the locator teeth. This is preferred because a relatively large value of a locator tooth width means that the locator tooth 32 of each slot pair will provide a greater magnetic flux linkage with the magnets 20, as they pass, thus resulting in increased emf within the corresponding coil 34, and thus improving the output of the machine.

In a further aspect of the geometry, the width w of the magnets 20 exceeds the width a of the locator tooth.

The principles of the invention are particularly applicable to modular winding machines, particularly those with open slots, as described.

The arrangement described above allows for the easier insertion and removal of coils (by virtue of the parallel sided slots), and also allows the machine to benefit from enhanced emf by allowing different widths for the locator and separator teeth. The principles outlined above can be implemented in a rotary machine, as described, or in a linear machine. In a linear machine, all slots would be substantially parallel to one another. Spacer teeth would be narrower than locator teeth but would not be required to taper.

The width of the locator teeth may be increased and the width of the spacer teeth reduced up to a point at which the spacer teeth just start to become saturated (accounting for both the armature leakage flux and the limited magnet flux). The magnet poles are ideally wider than the locator teeth to maximise useful armature coil flux linkage.

The increased locator tooth width allows the magnet pole width to be suitably increased and thus the number of poles to be reduced. For most modular permanent magnet machines, the number of poles is typically P=S±n,

Where P=number of magnetic poles
S=number of slots

And n is an even number and n≤S/4 typically.

With the increased width of locator teeth, the pole number can now be reduced without loss of performance, so that the number of poles is now given by P=S/2±n. The increased flux linkage by having wider teeth and poles offsets the reduction in frequency due to lower pole number.

A smaller number of magnets 20 or poles is advantageous since it reduces the frequency of operation of the machine and its associated power electronics. The operating frequencies of many modular machines is too high and causes excessive iron loss and stray loss as well as problems in pulse width modulated switching in the power electronics.

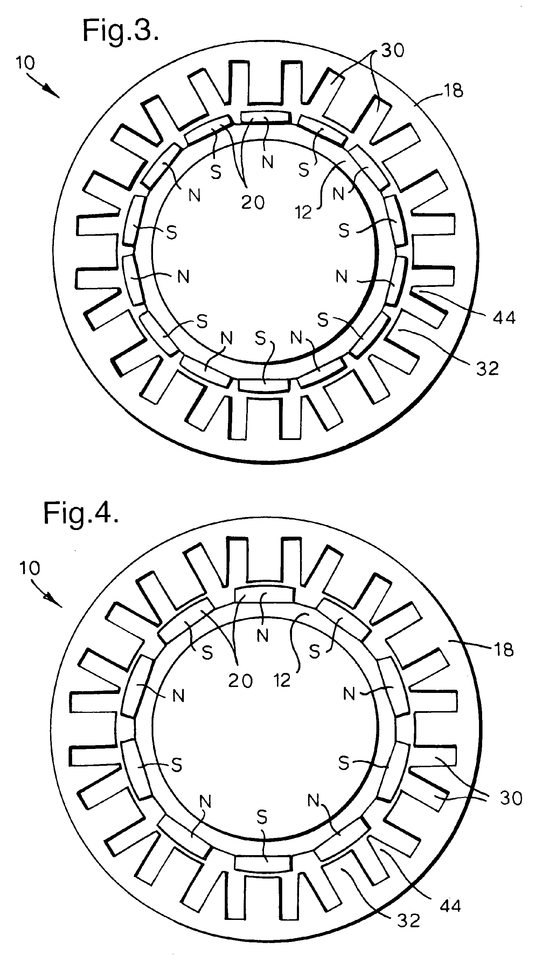

Figures 3 and 4 show designs of permanent magnet machines having 24 coil slots and 14 and 10 magnets respectively. Normally a modular permanent magnet machine with 24 slots would have at least 18 poles. Assuming a rotational speed of 6000rpm, the respective frequencies for the various pole numbers are as follows:

| | | |
|---|---|---|
| 18 poles | 6000rpm | 900Hz |
| 14 poles | 6000rpm | 700Hz |
| 10 poles | 6000rpm | 500Hz |

The 500Hz, 10-pole design is preferred since it reduces the losses in the machine and simplifies the converter design.

Increasing the width of the locator teeth has the consequence of increasing the magnetic coupling between phases, whereas for fault tolerant machines it is important to ensure that the coupling between phases is minimised. This is achieved with certain slot and pole number combinations (for example with 24 slots and 6 phases using either 14 or 10 poles) when each phase comprises an equal number of anti-phase coils and the armature-induced air-gap flux is balanced by oppositely induced fluxes from coils of the same phase. Using a non-preferred slot and pole number combinations with equal widths of locator teeth and spacer teeth, the coupling between phases is typically greater than 4%. This coupling increases with proportionately increased tooth width. An appropriate choice of slot and pole number combinations is therefore essential for fault tolerant machines in conjunction with the increased locator tooth width proposed herein.

## Claims

1. A permanent magnet electrical machine (10), the machine (10) including:
an armature (18) comprising a magnetic core, coil slots (30) in the core and coils (34) received in the coil slots (30);
and a permanent magnet member (12), which moves relative to the armature (18);
the coil slots (30) are arranged in the armature (18) in pairs, the slots (30) of each pair being separated by a locator tooth (32);
each coil (34) is received in the slots (30) of a slot pair and located around the corresponding locator tooth (32);
and each slot pair is separated from adjacent slot pairs by a spacer tooth (44), **characterised in that** the tips (36) of the locator teeth (32) are wider than the tips (46) of the spacer teeth (44), when viewed perpendicular to the direction of movement, in use, of the movable member (12) relative to the armature (18), to increase the flux linkage with the stator coils (34).

2. A machine (10) as claimed in claim 1 **characterised in that** each locator tooth (32) has sides which are substantially parallel to one another.

3. A machine (10) as claimed in claim 1 or claim 2 **characterised in that** each separator tooth (44) has sides which are angled so that the spacer tooth (44) tapers radially inwards towards the tip (46).

4. A machine (10) as claimed in any of claims 1-3 **characterised in that** each slot (30) has walls which are substantially parallel with each other and with the walls of the other slot of the same slot pair.

5. A machine (10) according to any of claims 1-4 **characterised in that** the tips (36) of the locator teeth (32) are closer to the movable permanent magnet member (12) than the tips (46) of the spacer teeth (44).

6. A machine (10) according to any preceding claim **characterised in that** the moveable permanent magnet member (12) is a rotor which rotates about an axis (14).

7. A machine (10) according to claim 6 **characterised in that** the rotor (12) provides magnetic poles (20) facing the teeth (32,44), the magnetic poles (20) being wider than the locator teeth (32), when viewed parallel to the axis of rotation (14).

8. A machine (10) as claimed in claim 7 **characterised in that** the width (a) of the locator teeth (32) is increased until the number of magnetic poles P and number of slots S satisfy the equation P=S/2±n, where n=even and n≤S/4.

9. A machine (10) as claimed in claim 8 **characterised in that** P=14 and S=24.

10. A machine (10) as claimed in claim 8 **characterised in that** P=10 and S=24.
